# EUROPEAN PATENT APPLICATION

(11) **EP 4 790 700 A2**
(43) Date of publication of application: **12.08.2026**
(21) Application number: 26179363.2
(22) Date of filing: 28.04.2023
(51) Int. Cl.: G09G 5/00

(54) **AUTOMATIC MODULE ARRAY MAPPING WITH INHERENT REDUNDANCY**

(30) Priority: 29.04.2022 LU 102936
(62) Document number(s) of the earlier application(s) in accordance with Art. 76 EPC: 23722399.5 / 4 515 373
(71) Applicant: Barco n.v., 8500 Kortrijk (BE)
(72) Inventor: DEVOS, Bruno, 9870 Zulte (BE); GOOVAERTS, Yves, 8501 Bissegem (BE); VANDENDRIESSCHE, Dirk, 8500 Kortrijk (BE); DEMUYNCK, Bert, 8870 Izegem (BE)
(74) Representative: Sader, Marc

(57) **Abstract**

There is provided a method for automatically routing a display wall comprising a section comprising a plurality of LED display modules, each display module comprising a display module controller and a left, right, top and bottom port located on each side of the module respectively and connected to the controller, each display module further being connected to at least one direct neighbour display module through a respective port among the left, right, top and bottom ports, a display wall processor being connected to one of the plurality of display modules.

## Description

### TECHNICAL FIELD

The present disclosure relates to a method of mapping an array of display modules, a method of generating an automatic display wall routing scheme, and a method of installing a display wall.

### BACKGROUND

Large LED displays are usually composed of an array of smaller LED modules and a LED display processor that processes a video input to send a portion of the image to each LED module. A link cable is used to connect the processor to a LED module and to interconnect the different LED modules together.

However, various challenges arise from this setup:
- The user needs to follow a (complex) routing scheme. The routing scheme needs to prevent that too many tiles are connected to a single link and needs to connect all the tiles to the processor in a logic way.
- The processor needs to know the position of each LED module in the module array (X and Y position) to allow a correct video mapping on the different LED modules.
- Different LED modules are usually connected in a daisy chain: if one or multiple modules or link cables break, a large portion of the display will fail.

Current solutions in the prior art have developed different solutions for each of the problems above:
The user or technician responsible for installing the LED display needs to follow a predefined routing scheme. However, mistakes in the routing are difficult to detect.

An array mapping of the LED modules can also be provided:
- Manual array mapping provided by the user to the LED display processor. The technician needs to follow the correct array mapping.
- Automatic array mapping by means of a secondary communication channel (example: IR, RFID...). For example, patent application US20130181884 discloses the use of detection means such as LEDs and photoreceptors arranged on the LED modules to detect the presence of adjacent LED modules. A map of the display geometrical configuration is generated based on the detection of the presence of the adjacent display units.

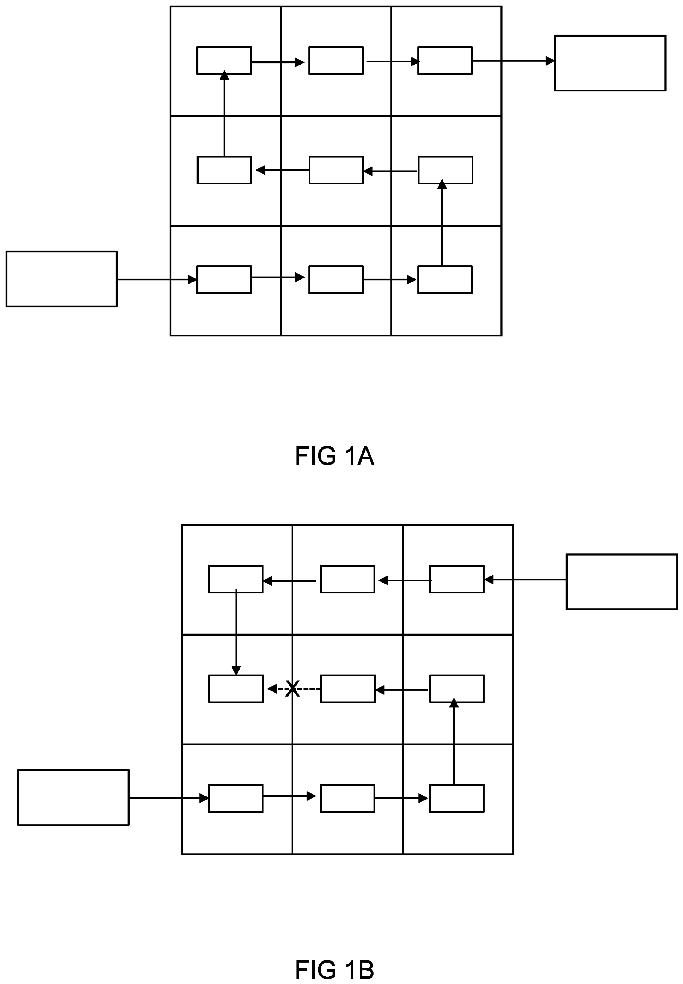

In addition, to prevent failure in the system, an additional link and processor can be provided at the other end of the chain, as illustrated for example in Figure 1. This link redundancy with a processor at both ends of the snake-like cabling enables the display to still operate when a link or a controller shows a failure.

However, if an additional link fails, a portion of the display will not be operational.

US 8,766,880 B2 describes a system and method provided for a pixel module (each module is a single pixel) to determine its location in a large scale LED display. The system and method determine the pixel module's location based upon the data received by the module and the identity of the module's port via which the data was received. A master module enumeration state machine performs an enumeration process to determine the location of the master LED module within a display panel and thus, an address for the master LED module so that each pixel of the display can be individually addressed to deliver data thereto. However, the enumeration message received by the first master module is generated by an external data hub. This enumeration message is then forwarded incrementally to the next LED modules, from the first master LED module.

Such a method can only start from one location of the display panel and requires the data hub to trigger the start of the enumeration process.

There is thus a need for improvement in the art.

### SUMMARY

It is therefore an object of the present invention to provide a method for automatically mapping a display wall comprising an array of display modules, which is independent of a processor, and wherein the display modules can update their position autonomously, and automatically.

In an aspect, there is provided a method for mapping a display wall comprising a display module controller and a port on each side of the module connected to the controller, each display module further being connected to a at least one direct neighbor display module through a respective side port, the display wall having a reference display module with reference coordinates and an incremental direction for the coordinates of the display modules, , the method comprising the steps of
- Powering up the display wall such that all display module controllers are turned on,
- Setting all display module coordinates to an initial setting wherein all display module coordinates have a same default value coordinate corresponding to the coordinates of the reference display module,
- each display module continuously communicating with its direct neighbour display module via a corresponding side port by sending tile-to-tile packets comprising information on at least the coordinates of said display module, and by receiving tile-to-tile packets from each direct neighbour display module comprising information on at least the coordinates of said direct neighbour display module,
- After sending and receiving the tile-to-tile packets, for each display module, continuously updating the display module coordinates by comparing its coordinates to the coordinates of each of its neighbours and following the incremental direction with respect to the coordinates of each of its neighbours.

This method enables the display modules to generate their coordinates automatically, without the use of an external processor. The display wall is self-updating, and even when display modules are added or removed, the coordinates of each display module will be updated automatically and autonomously.

In addition, this method can be implemented for an undefined period of time if desired.

Preferably, the step of updating the coordinates by comparing the coordinates of the two neighbouring display modules is performed as follows: if the coordinate of a first display module of the two neighbouring display modules is higher than, lower than, or equal to the coordinate of a second display module of the two neighbouring display modules, incrementing, decrementing, or keeping as is the coordinate of the first display module as a function of the coordinate of the second display module and incremental direction of the display wall.

This method is simple to implement at the level of each module controller.

Advantageously, the default value of the coordinates of the plurality of display modules are coordinate of a reference position in the display wall.

For example, all coordinates can be set to {1;1}, which may correspond to the coordinates of the reference display module, located for example in the top left corner. All the other display modules will calculate their coordinates with respect to the reference display module.

The tile to tile packets may further comprise information on the display module unique ID of said display module.

Advantageously, the step of continuously communicating with a direct neighbour display module is performed at a bandwidth which is compatible with the bandwidth of the link cable connecting two display modules.

For example, the bandwidth can be of 375 000 times per second when using the maximum packet length, and a maximum of around 4.6 million times per second when using the minimum packet length. When no display wall processor is connected the minimum packet length can be used as there is less information to transfer. However, lower bandwidth than the ones available in the system are also possible for transferring tiles to tiles packets.

Preferably, the method further comprises the step of dividing the display wall into at least one section, or at least two sections.

For larger display walls, it is important to provide a plurality of sections, as each section will receive independently from a display wall processor section packets which comprise the visual data to be displayed.

However, the automatic array mapping procedure is independent of the sections. The sections matter for sending the information to be displayed. Therefore, in the present invention, each display module knows its position in the display wall, irrespective of the sections, whereas in prior art solution, the display modules only know their positions within, the sections, and not within the display wall.

The number of display modules per section depends on the bandwidth of the link and on the resolution of the display modules such that the display wall is capable of displaying video data at the required frequency.

The method may further comprise the step of connecting at least one display module of a section to a display wall processor.

Another advantage of the present invention is that the display wall processor can be connected to any display module of the section. The system will automatically adapt to any configuration chosen by the person installing the display wall. This also provides flexibility to the person installing the display wall, such that it is possible to adapt to mechanical constraints. It also removes the possibility of making mistakes while connecting the display modules of a section to the display wall processor.

Preferably, the method further comprises, for each display module, the following steps
- a display module receiving a packet from a corresponding display wall processor and selecting a port receiving the packet as upstream port, setting the other ports to downstream ports,
- The corresponding display wall processor receiving a reply packet from the display module comprising information on the display module, the display module is a connected display module,
for the display wall, the step of,
- When all the display modules of that section are connected to the display wall processor, the display wall processor completing a list of connected display modules with their information,
- Each of the connected display modules forwarding said packet on at least one downstream port when available

This method step is possible with only one or a plurality of sections in the display wall. This enables the display wall to automatically identify the routing to later send the video packets to all the display modules of a section. Every time the video wall is started again, the routing may change. The routing may even automatically change during use, if for example a connection between to tiles is defect. The user will not even notice.

Even more preferably, the method further comprises, for each display module belonging to a same section when the display wall has at least two sections, and each section having a corresponding display wall processor, the steps of,
- The display wall processor of said section receiving a packet from a display module to connect containing its information, thereby adding said display module to the list of connected display modules of said section,
- The display wall processor sending a section packet to the connected display module in said section, comprising information on the display module and the information of the other display modules of said section,
- the display module receiving the section packet from the display wall processor and verifying if its display module information is connected and is in the list,
- If in the list, the display module selecting a port of the display module receiving the section packet as upstream port, and the remaining ports as downstream ports,
- The display wall processor receiving a reply packet from each connected display modules containing the display module information and neighbour display module information,
for each section, the step of,
- When all the display modules have been connected, completing the list of connected display modules with their information,
- each of the connected display modules forwarding said section packet on at least one downstream port when available.

Even when a plurality of sections are provided, the automatic routing is guaranteed with the method above. The section packets may further comprise the section number.

Preferably, the display module information comprises at least the display module coordinates, and preferably its unique ID, and preferably the coordinates and/or unique ID of each neighbouring display module, and preferably the section number said display module belongs to when available.

The display module information ensures that the correct video packet is sent to the correct display module when the display wall is being used.

Advantageously, the step of selecting the upstream port for each display module is based on selecting the port having the highest priority which is operable.

Even more preferably, the method further comprises the step of defining, by the display wall processor, the coordinate of a display module to a predefined coordinate.

It is preferred that the method further comprises the step of updating the coordinates of the display modules of the display wall other than the display module having the predefined coordinate with respect to the predefined coordinate.

Defining a coordinate to a predefined coordinate may be useful upon partial start up of a wall. For example, because the coordinates always start from 1;1 on partial startup of the wall (where columns on the left for example are still off) the coordinates would be wrong.

While the coordinates are wrong, a wrong video will be shown. But as the display wall processor knew what the coordinate should be from before, the old "correct" coordinates may be forced to make sure the video is correct.

It is an advantage that a display module autonomously selects a new upstream port when its current upstream port fails.

The method may further comprise the step of connecting the same or a second display wall processor to the first or to a second display module of the at least one section.

Providing redundant cables between a display wall processor and a display module ensures that the display wall will keep running during use even if a connection is defect.

The display modules can be at least one of rectangular, hexagonal, and wherein the display wall follows a matrix arrangement, honeycomb arrangement, etc. accordingly.

Any geometry can be implemented with the present invention.

The display modules can also be provided by LED, OLED, micro-LED, LCD, e-Ink, display modules, (rear) projection display, or any other visualisation technology.

Each display module may also comprise a controller and a port on each side of the module, each port comprising a port ID specifying the location of the port on the display module.

The method advantageously further comprises the step of using the port ID to detect a wrong cabling connection.

For example, if the top of display module is connected to the left of an adjacent module instead of the bottom of an adjacent display module, the method can identify the wrong cabling, which would result in wrong coordinates.

In another aspect, there is also provided a method for installing a display wall comprising a plurality of display modules to generate a display wall having the desired configuration, each display module comprising a display module controller and a port on each side of the module connected to the controller, the method further comprising the steps of
- Installing each display module until the display wall has the desired configuration,
- Connecting each display module to its direct neighbour at each side port,
- Performing the method of any of claims 1 to 5 such that the display module coordinates are updated.

Preferably, the method further comprises the step of
- Adding, removing, or replacing display modules in the display wall,
- repeating the step of performing the method of any of claims 1 to 5 such that the display module coordinates are updated.

After replacing, or removing, or even adding display modules, the coordinates will be updated automatically.

This could be useful for example when installing such a display wall for commercial purposes. The display wall may require additional display modules for a new commercial. A technician updating the display wall will only need to connect the new display modules to the existing ones in the display wall, without any further requirements.

Even more preferably, the method may further comprise the step of dividing the display wall into at least one or a plurality of sections.

The method may further comprise the step of providing at least one display wall controller and connecting at least one display module per section to the at least one display wall controller.

Only if a new section needs to be generated, one display module of said section should be connected to a display wall processor. The technician will only need to add a connection between the display wall processor and any display module of the new section.

The method also further comprises the step of displaying images with the display wall of the present invention by further sending video packets to each display module, the video packets comprising for each display module its video data and corresponding display module unique ID.

### BRIEF DESCRIPTION OF DRAWINGS

The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:
Figure 1A is a schematic representation of a LED display comprising nine LED modules connected with a snake -wise cabling scheme and comprising two processors for redundancy.
Figure 1B is identical to Figure 1A wherein a link between two LED modules shows a failure.
Figure 2 is a schematic representation of a LED display wherein each display module controller is configured to connect to four adjacent LED modules.
Figure 1A is a schematic representation of a LED display and a possible routing scheme.

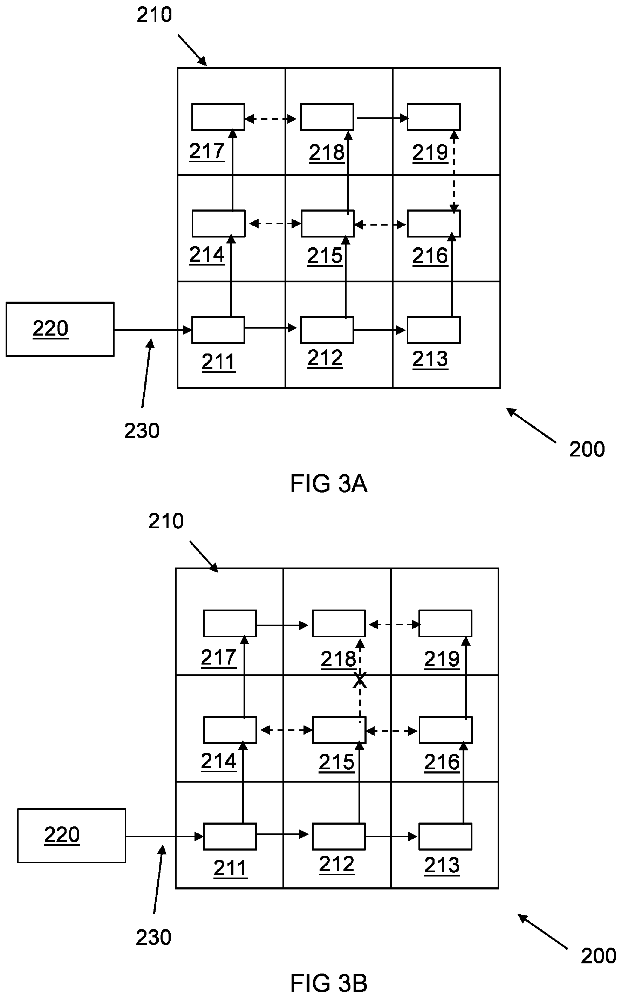

Figure 3B is a schematic representation of a LED display wherein a connection is defect, and a new routing scheme is implemented.

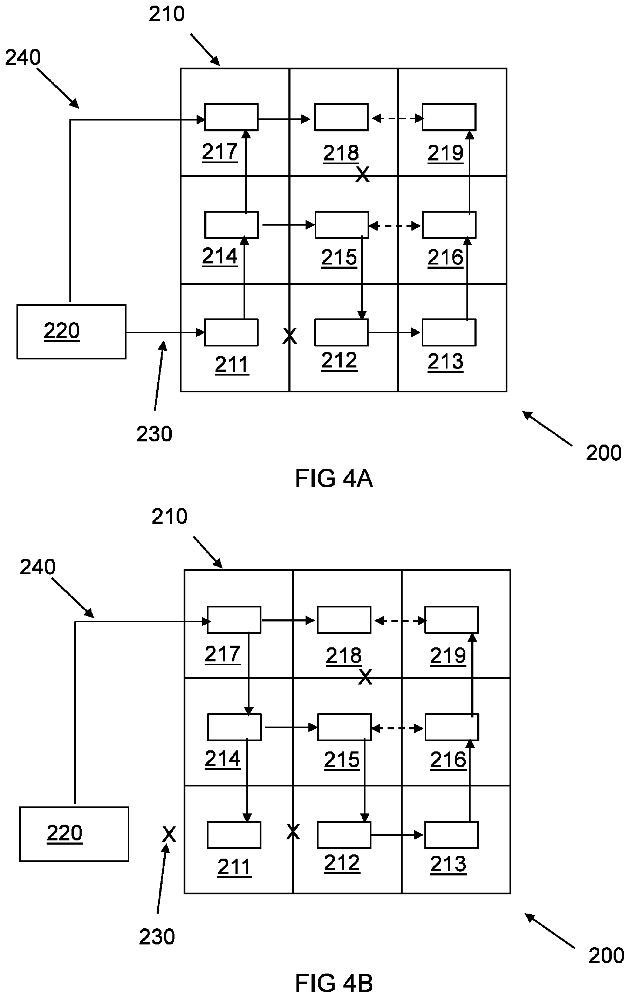

Figure 4A is a schematic representation of a LED display wherein two connections are defect.
Figure 4B is a schematic representation of a LED display wherein two connections are defect, and a redundant link is added to the processor.

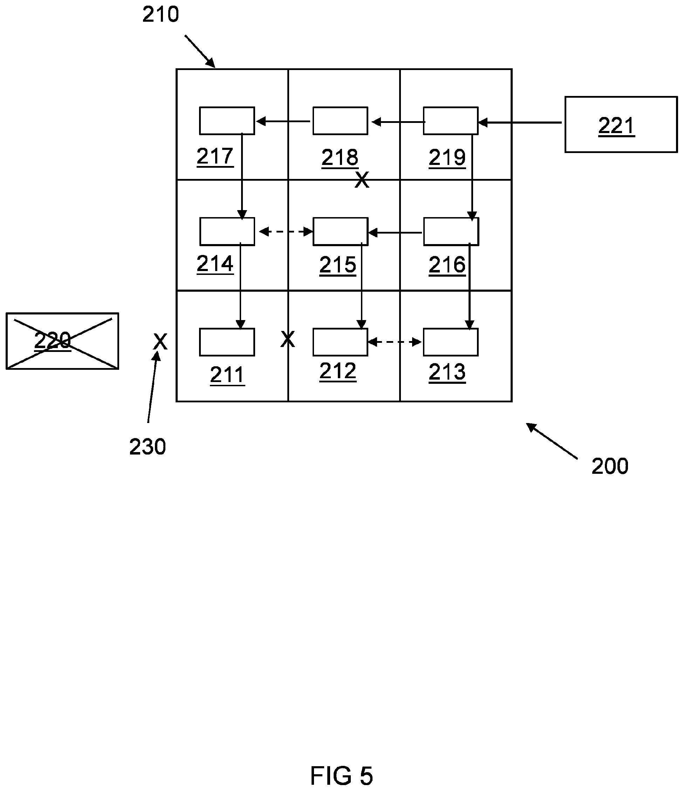

Figure 5 is a schematic representation of a LED display wherein a redundant processor handles failure of one of the processors.

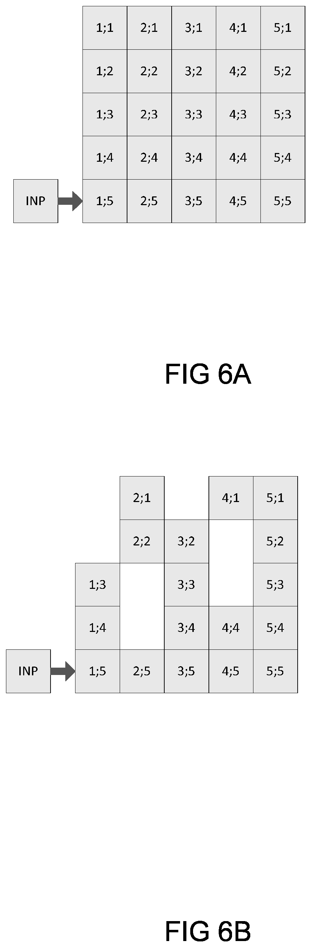

Figure 6A is a schematic representation showing a possible coordinate system.
Figure 6B is identical to Figure 6A in which some modules are absent or are defect.

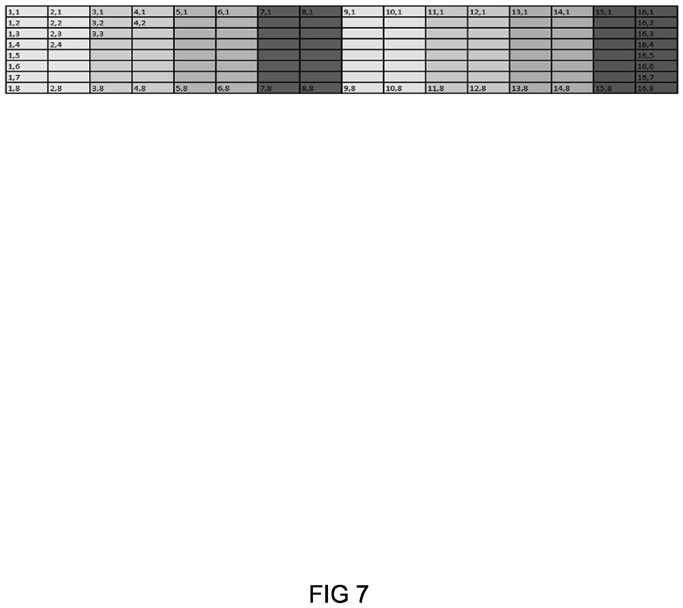

Figure 7 illustrates an LED wall comprising different sections, and the coordinates of the display modules in each of the sections.

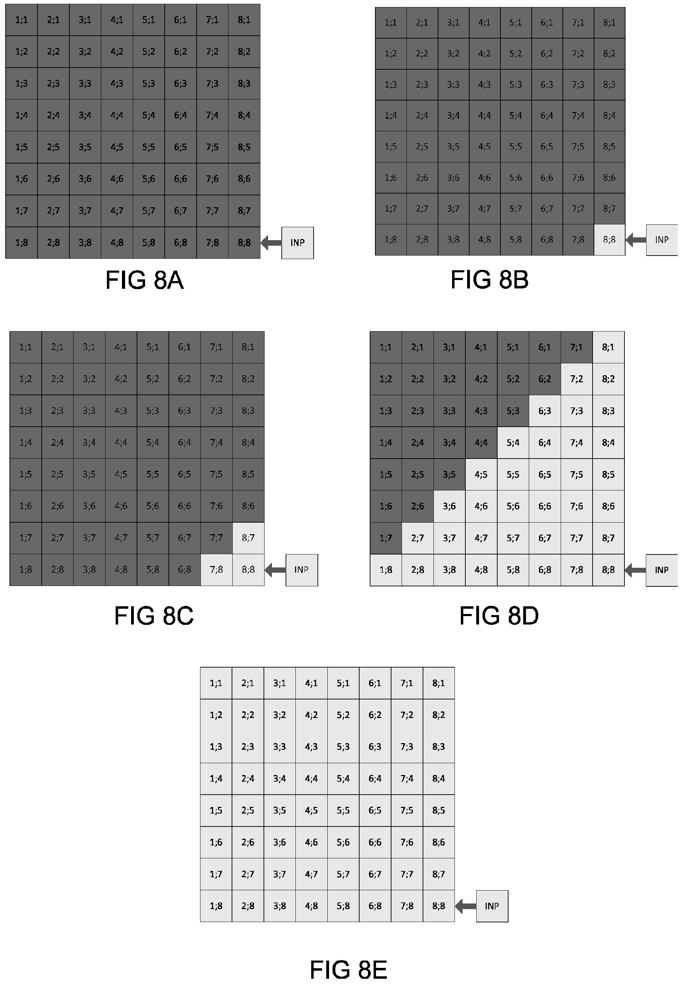

Figure 8A-8E illustrate the automatic routing procedure of an LED wall, and the intermediary steps during the routing of the wall.

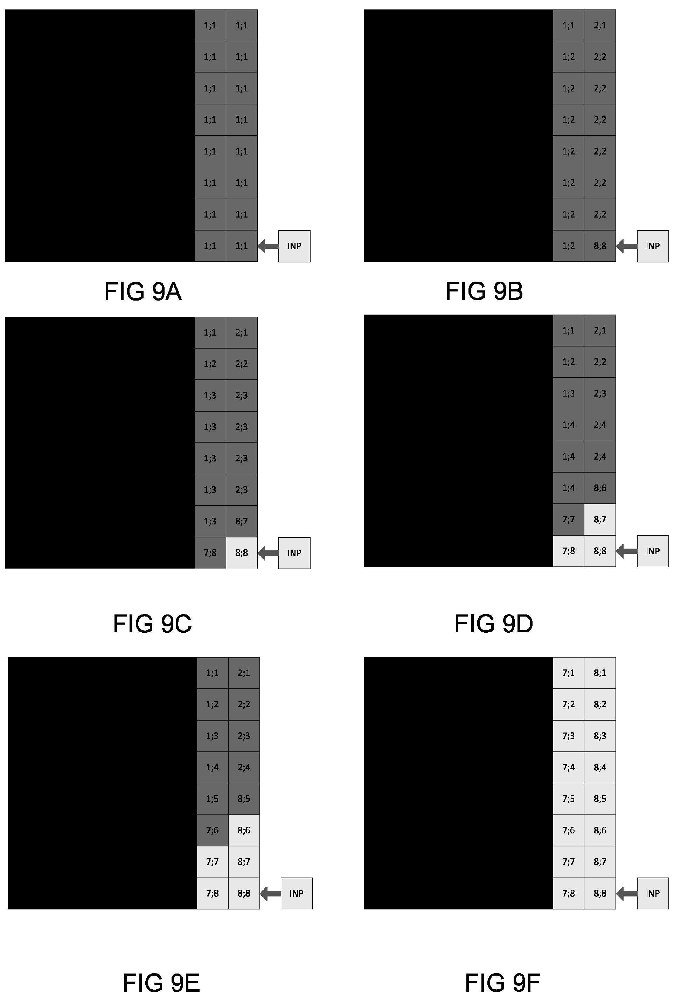

Figure 9A-9F illustrate the automatic routing procedure of an LED wall when forcing a coordinate.

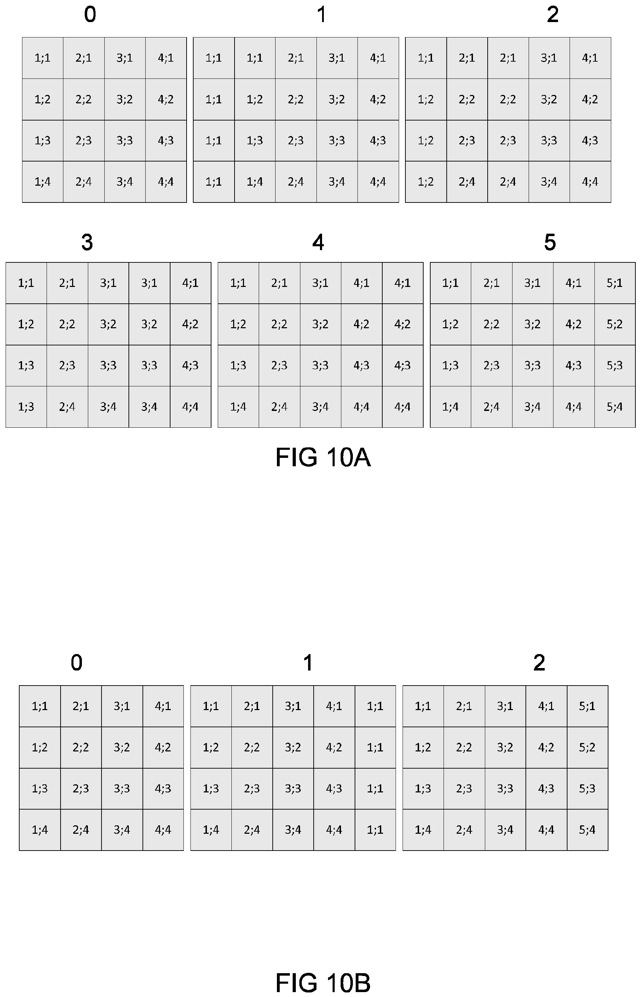

Figure 10A illustrates the functioning of the automatic array mapping procedure when a new column of tiles has been added on the left of the display wall.
Figure 10B illustrates the functioning of the automatic array mapping procedure when a new column of tiles has been added on the right of the display wall.

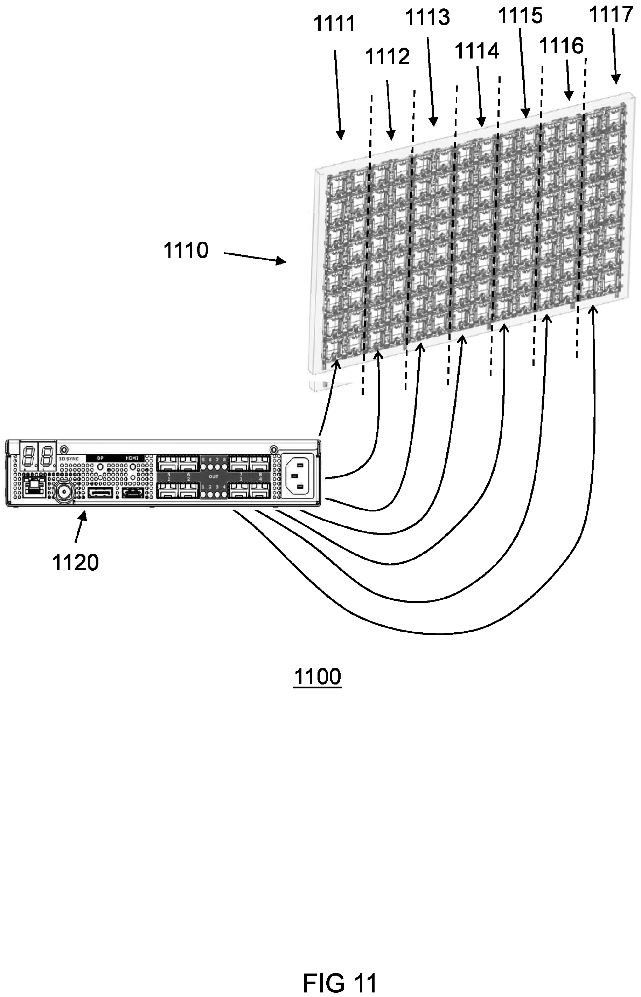

Figure 11 illustrates a system for controlling an LED wall system, wherein the LED wall is divided in a plurality of sections.

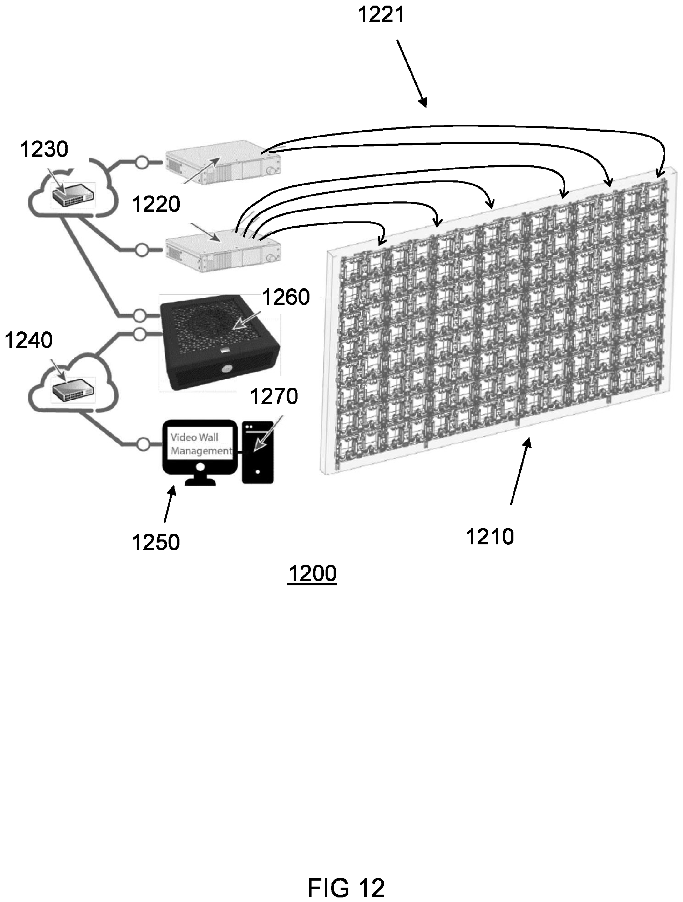

Figure 12 illustrates a system for controlling an LED wall system, further comprising an LED Video wall management suite, a client network, and a LED wall network.

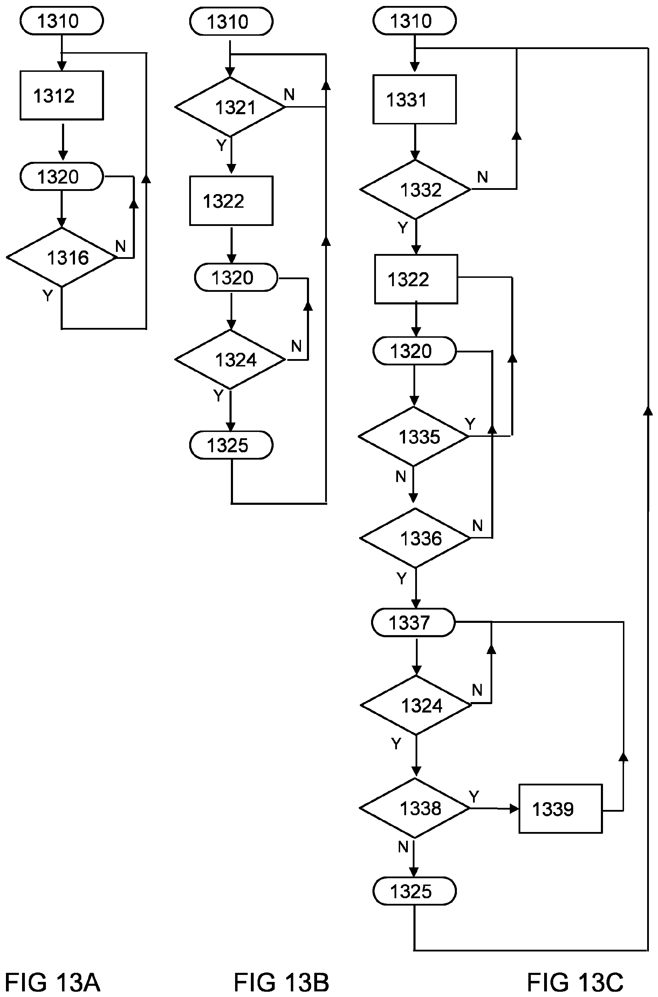

Figure 13A is a flowchart illustrating the automatic routing procedure at the level of the tiles.
Figure 13B is a flowchart illustrating the automatic routing procedure at the level of the tiles.
Figure 13C is a flowchart illustrating the automatic routing procedure at the level of the tiles.

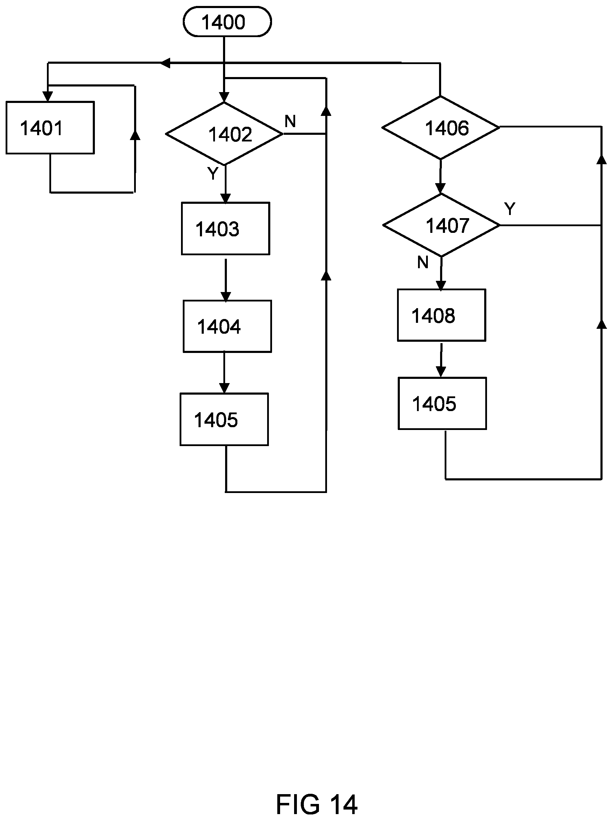

Figure 14 is a flowchart illustrating the automatic routing procedure at the level of the processor.

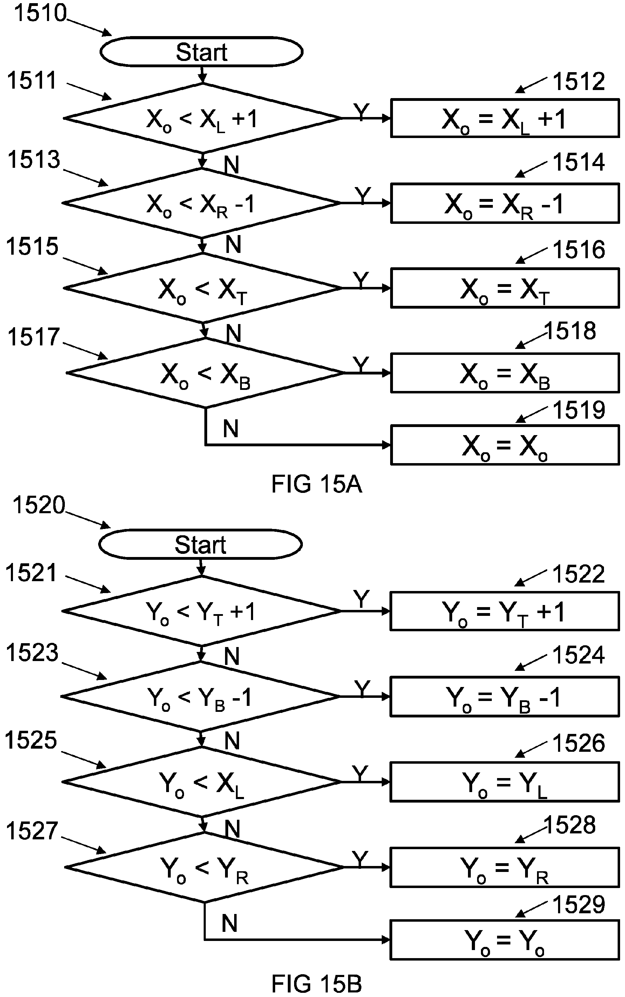

Figure 15A-15B are flowcharts illustrating the automatic array mapping procedure at the level of the modules.

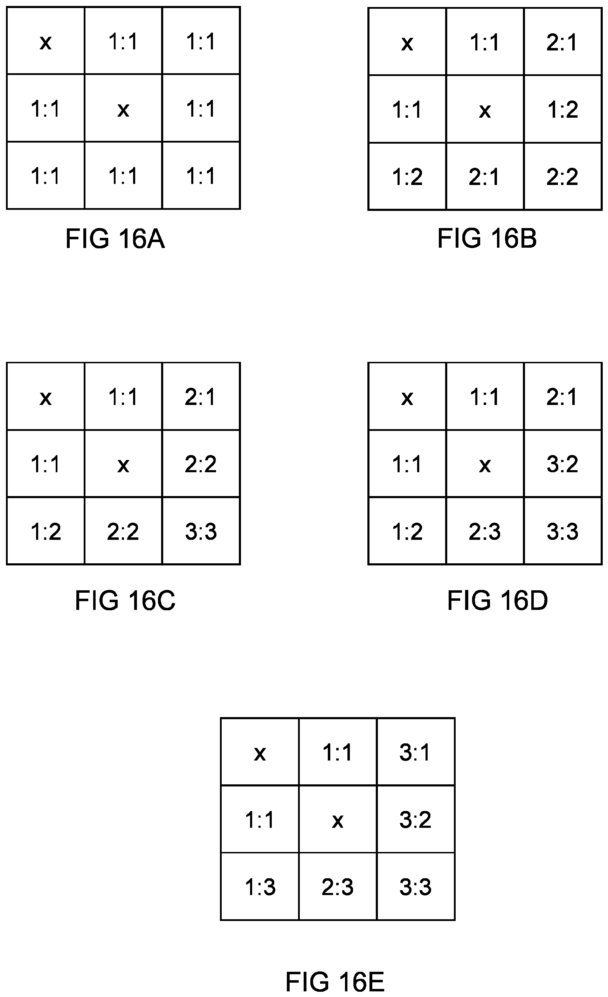

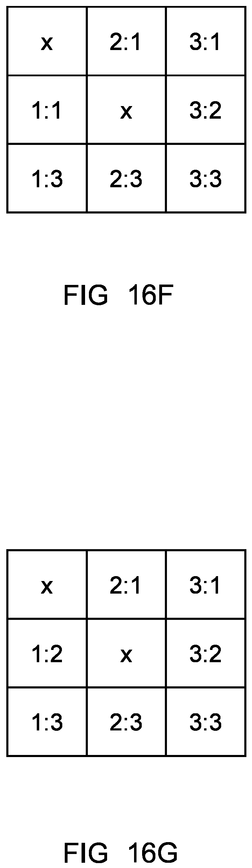

Figure 16A - 16G illustrate the automatic array mapping procedure of an LED wall when some modules are absent or are defect.

### DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise, it will be understood that when a connection between structures or components is described, this connection may be established directly or through intermediate structures or components unless specified otherwise.

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The terms "about" or "approximate" and the like are synonymous and are used to indicate that the value modified by the term has an understood range associated with it, where the range can be +20%, +15%, +10%, +5%, or +1%. The term "substantially" is used to indicate that a result (e.g., measurement value) is close to a targeted value, where close can mean, for example, the result is within 80% of the value, within 90% of the value, within 95% of the value, or within 99% of the value.

### Definitions

**Display module info ID** is a unique id identifying the display module. (ex. MAC address in ethernet applications). It can be for example an Unsigned Long (64 bit) ID of the display module/display wall processor. Unique serial number tied to the MAC address.

Video data is sent in separate **video packets** to the display modules through their info ID.

A **display wall** is usually composed of a plurality of individual **display modules** (or tiles) tiled together to form a larger display. The plurality of display modules can be operated together so that the overall display wall appears as a single, larger display. The front display surface can be formed from a plurality of individual light-emitting elements, such as LEDs, OLEDs, micro LEDs, etc., in which case the display modules are LED or OLED modules. Other types of displays can also be provided such as LCD displays, reflective displays such as E-Ink displays. A display wall can be controlled by at least one processor or display wall processor.

The **display modules** of the display wall in the present invention are all identical and interchangeable and comprise a module controller, connected to a port provided on each side of the display module. A side is any side of the module susceptible of having a neighbouring display module. The display modules are therefore interchangeable throughout the display wall. The display modules can thus have any shapes, such as rectangles, square, but can also be hexagonal, etc.

Each display module will automatically and dynamically be assigned its own coordinates in the display wall. Each display module further has its own info ID.

A **section** is a group of interconnected display modules that form a logical part of the display wall. The display wall processor sends video data in packets (video packet) which are dedicated only to that section. A same display wall processor can be connected to different sections of the LED wall. One output of a display wall processor is connected to one section of the LED wall.

Different types of **data packets** can be used. The structure of the different types of data packets can be implemented in different ways. The following data packets can be used: section packet, reply packet, T2T packet, video packet.

A **section packet** contains the coordinates of each display module which is connected to that particular section. Each display module will calculate its own coordinates and checks if it belongs to this section and selects the upstream port if it is included. Display modules will check any incoming section packet.

A **reply packet** is a communication data packet sent by the display module to the processor to indicate its presence.

Reply packets are meant to send data from a display module to the display wall processor. It lets the display wall processor know that this specific display module is still active and has not been disconnected. The display wall processor also can keep a list of connected display modules comprising display module information, such as for example the display module coordinates, and for example its corresponding info ID. It is only with means to identify a display module, that the display wall processor is able to send video data to said display module.

The reply packets can further comprise the neighbour port information. It can be used by the display wall processor to add the upstream info ID to the composition information and to find the redundant display wall processor connected to the wall.

There can be 5 different info ID's given back to the display wall processor. The order can be for example the following: current display module, left neighbour, top neighbour, right neighbour, and bottom neighbour.

**T2T packet (Tile to tile packet)** is a communication data packet sent by the display module to its direct neighbours to communicate its current position. The tile to tile packets comprise at least information on the display module coordinates.

The display modules can create a max bandwidth full of T2T packets on this upstream, as well to the ports when no display wall processor has been connected to the display modules. These packets should be small and are only meant to update the display module communication and are used in the automatic array mapping procedure. The tile to tile (T2T) packets may also comprise an info ID of the display module/display wall processor. Every display module can preferably update this field with their own info ID so neighbours have this information and can send it back to the display wall processor in a reply packet.

A **display wall processor** is a processor configured to be connected to at least one tile of a display wall, or, if the display wall is divided into sections, to at least one tile of a section of a display wall. The display wall processor is responsible for reading video data from any video source or medium and sending this video data to the display modules in a format that is fit for this purpose (video packets). The display wall processor will also keep a list of connected display modules per output port. It will also collect information from the connected display modules to make this available to a connected video wall manager. Any video processing can also be done in the display wall processor.

A **video wall manager** is a program configured to divide the wall into sections, for each display wall processor connected to the wall and gives all this information to the display wall processors.

**Port priority** A display wall processor can have ports with different levels of priority that will all send the same video data. A display module will always listen to the highest priority display wall processor port. Only in case of failure, it will start listening to a lower priority port.

### Upstream, upstream port

Upstream is the communication direction towards the processor. On the display module, the upstream port is the port where it sends packets towards the processor. All other ports are downstream ports. A display module can only have one upstream port.

### Downstream, downstream port

Downstream is the direction away from the processor. On the display module, communication from the processor is forwarded on the downstream ports. A display module can have multiple downstream ports.

### Incremental direction

Incremental direction typically refers to the direction in which a quantity or value is increasing or decreasing in small, incremental steps or increments.

In a tiled display, incremental direction refers to the direction of updates or changes in the display coordinates or arrangement. It is usually either left-to-right and top-to-bottom or right-to-left and bottom-to-top, depending on the specific implementation. For example, if the incremental direction of a tiled display is left-to-right and top-to-bottom, the system will first update the display modules in the left-most column, from top to bottom, before moving to the second column, and so on until all display modules are updated. This direction is called incremental because each update incrementally moves the system closer to its final state.

**Reference position** is the position of a display module corresponding to the display wall that is used as a reference to find the corresponding coordinates of all display modules of the display wall. The reference position further refers to a default value of coordinate of all display modules during initial setting. The reference position may be any position on the display wall. Optionally, the reference position is the position of a corner display module. The incremental direction of the coordinates of the display modules further depends on the coordinate of reference position to be used during comparison.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-unit illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

Throughout the description, the terms display module and tile are used interchangeably.

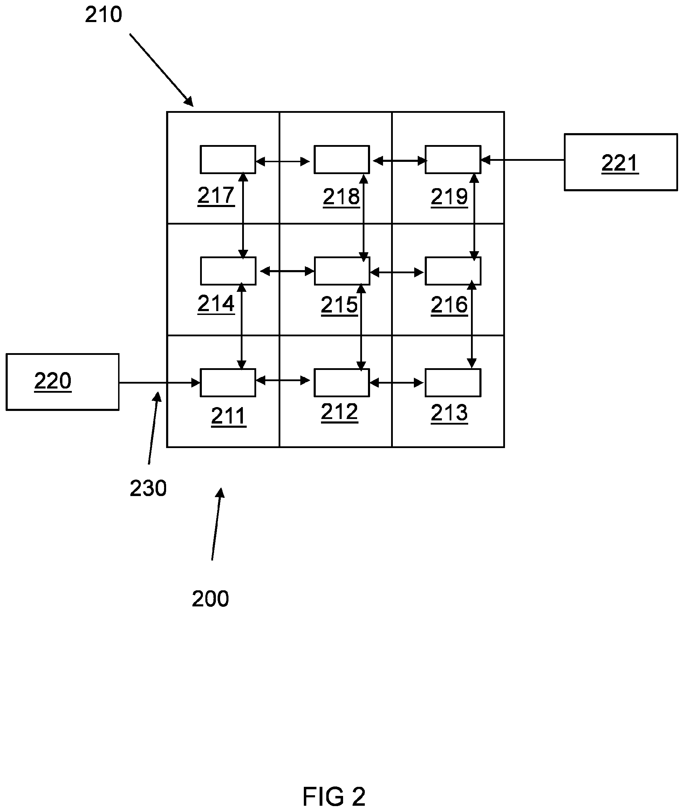

Figure 2 illustrates a display wall section 200 of a display wall. A display wall section is a group of display modules 210 which are connected to at least one display wall processor. Typically, a display wall section comprises 9 to 64 display modules, however more or less display modules can be provided as well. The number of display modules per section typically depends on the pixel pitch, the frame rate, the bandwidth, the compression, etc. The examples illustrated in the present application comprise 9 display modules per display wall section.

A first display module 211 of the display wall section is connected to a first processor 220 by means of a connection cable 230. The connection cable is configured to transmit data in both directions. The connection cable can be provided by a custom fiber cable or any other type of data connection suitable to transmit video data.

The display modules 210 of the display wall section are arranged in an array such that each display module can have neighbouring display modules. Each display module comprises a module controller having a port per side of the display module for connecting a neighbouring display module at each side of the LED module.

In the example of Figure 2, the display modules are arranged in an array of 3x3 display modules. Each display module has a controller having four ports for connecting each direct neighbour by means of a connection cable. Thus, in this example, the central display module 215 has four direct neighbours, one at the top 218, one at the bottom 212, one on the left 214 and one on the right 216, whereas the side display modules or corner display modules are only connected to 3 or 2 adjacent display modules, respectively.

Each controller of the display modules in the array is further configured to detect the presence of a neighbouring display module in each port and deduce therefrom the position and the coordinates of the corresponding display module in the array. This automatic array mapping method is further described below.

Each port of the display module has a dedicated position in the LED module. Each port can further have its own port ID, i.e., for a rectangular display module, top, bottom, left, right port. A left port will always have to connect to a right port, a top port will always have to connect to a bottom port, etc.

A controller can thus detect if the packets on a port were sent from the expected port of the neighbouring controller. The port ID can be added to each packet that is sent by a module controller. For example: a controller can detect that it receives packets on the left port from a right port of another controller. When a mistake is detected, the user can for example be informed by an OSD message to correct the mistake.

Providing this new connection scheme in the display wall section provides several advantages:

The installation is simpler as each display module needs to be connected to its direct neighbours, i.e., each controller is to be connected to each top, bottom, right and left neighbour controller when they are available. Thus, no mistakes can be made upon connecting the various display modules together.

If the display modules are rectangular, the horizontal connections may have a different size than the vertical ones. Mistakes can be prevented mechanically by using pigtail cables of the exact length to make mistakes physically impossible, or use a cable-less solution (wireless communication or board to board connection)

At each start up of the system, or at each reset, or upon failure of an element of the system, a new routing scheme is automatically generated for the signal data such that all display modules receive the appropriate intended image for the display wall.

As illustrated in Figure 2, the display wall section can comprise additional display wall processors, or redundant display wall processors in case a processor fails. In Figure 2, processor 221 is connected to display module 219. Additional processors can also be provided, or additional connections between a processor and other display modules.

Each module will autonomically pick one port as upstream port (based on a priority rule for example) and forward all packets from that upstream port to the three other ports (downstream ports). When there is no longer valid data received on the selected upstream port, the module can immediately select a different upstream port with a valid data stream. This will result in a seamless cable redundancy and automatic routing scheme.

Figure 3A illustrates a possible routing scheme resulting from the above considerations. All display module controllers receive a signal from a neighbouring module controller.

In Figure 3B, one of the connections is defect. The system automatically recalculates a new routing scheme such that all display modules remain operational while they are displaying images. The user will not have time to notice the failure as the calculation can take only a few milliseconds. During the calculation, the previous frame can be displayed.

Another example is illustrated in Figure 4A, where two connections are defect, and the system needs to find a new routing scheme.

In Figure 4B, the connection between the processor 220 and the display module 211 is defect. Another already existing connection 240 between the processor 220 and the display module 217 is then activated.

Multiple processor links can be setup between one or different processors and the display module array. By assigning a different priority to each of the links, it is possible for the modules to seamlessly switch to a lower priority link when one of the higher priority links fail. This is the case when a link cable breaks or when a processor fails.

In Figure 5, the processor 220 is also defect, and the processor 221 takes over with a new routing scheme.

The automatic array mapping procedure can now be described.

The different types of packets, in particular the tile to tile packets, which are being communicated in the system allows the system to provide an automatic array mapping procedure to automatically calculate the coordinates of each display module in the display wall, irrespective of the sections.

### Automatic array mapping

Figures 6A and 6B illustrate the coordinates which have been assigned to each display module of the display wall, in two scenarios, as further described below.

The display wall can comprise one section or more than one section. The automatic array mapping procedure does not require a display wall processor, but only tile to tile communication. The automatic array mapping procedure is performed over the entire display wall, irrespective of the sections.

Each display module can calculate its own coordinate (for example 14 bits X and Y) position in the wall, with respect to a reference position, for example the top left corner having value {1;1}. Even in a configuration where there is no physical tile in that position, the other tiles are still capable of calculating their position with respect to the reference position, such as the top left corner, as if there was a tile in said position (Figure 6B).

Because each tile has a specific port for left, top, right and bottom, an algorithm is provided to determine the tile coordinate depending on what packets are received from each port.

Apart from or on top of the video data, each tile can autonomously send a tile-to-tile packet to each of its neighbouring tiles (top, bottom, left and right). A simple algorithm guarantees that each module can at all times know its exact video wall coordinates or position, and thereby recalculate it if there are changes in the configuration of the display wall, such as a new column in the display wall.

Tile-to-tile communication hereby refers to the communication between two adjacent or neighbouring display modules controllers. The communication is performed between two neighbouring display module controllers via the side ports which are connected one to each other.

Each port of the tile preferably has its own port ID which determines its location on the tile. The location of the port on the tile can therefore determine with which other port it can communicate.

For example, the tiles coordinates can start with coordinate {x_{c}, y_{c}} set to {1;1} by default for each tile. Each tile can send its own coordinates to each neighbouring tile by using the tile-to-tile communication packets.

Coordinates can never decrease, only increase unless after a power off or reset, then all coordinates are set back to default value {1;1}.

If no processor is connected the tiles create a full bandwidth of packets on each port that comprise their coordinates.

The method for mapping a display wall comprises the following steps: powering up the display wall such that all display module controllers are turned on. Each display module then starts to continuously communicate with its direct neighbour via each side port by sending tile to tile packets comprising information on at least the coordinates of said display module. Simultaneously, each display module also receives tile to tile packets from each neighbouring display module comprising information on at least the coordinates of said neighbouring display module.

A reference position should be defined in the display wall, said reference position having a reference coordinate, and defining an incremental direction in the display wall with respect to the reference display module. For example, the top left corner has coordinates {x=1; y=1}. The incremental direction being from left to right for the x coordinate and from top to bottom for the y coordinate.

For each display module, continuously updating the display module coordinates by comparing its coordinates to the coordinates of each of its neighbour following the incremental direction and with respect to the reference display module position.

If the display module coordinate is higher than, lower than, or equal to the display module coordinate of each direct neighbour, the coordinates of said display module can be incremented, decremented, or maintained, depending on the incremental direction and the reference position in the display wall.

With rectangular LED modules, it is assumed that each LED module has a left, right, bottom, and top port.

For example, the following rules can be implemented, assuming the top left corner is set to {1;1}.
1. When a tile receives coordinates on its left port, it must verify that its own x coordinate xₜᵢₗₑ is equal to or higher than the received x_{left} + 1, if this is not the case, then xₜᵢₗₑ becomes received x_{left} + 1.
2. When a tile receives coordinates on the right port, it must verify that its own x coordinate xₜᵢₗₑ is equal to or higher than the received x_{right} - 1, if this is not the case, then xₜᵢₗₑ becomes received x_{right} - 1.
3. When a tile receives coordinates on the top or bottom port, it must verify that its own x coordinate xₜᵢₗₑ is equal to or higher than the received x_{top/bottom}, if this is not the case, then the xₜᵢₗₑ coordinate becomes received x_{top/bottom} coordinate.
4. When a tile receives coordinates on the top port, it must verify that its own y coordinate yₜᵢₗₑ is equal to or higher than the received yₜₒₚ coordinate + 1, if this is not the case, then yₜᵢₗₑ becomes received yₜₒₚ coordinate + 1.
5. When a tile receives coordinates on the bottom port, it must verify that its own y coordinate yₜᵢₗₑ is equal to or higher than the received y_{bottom} coordinate - 1, if this is not the case, then yₜᵢₗₑ becomes received y_{bottom} coordinate - 1.
6. When a tile receives coordinates on the left or right port, it must verify that its own yₜᵢₗₑ coordinate is equal to or higher than the received y_{left/right}, if this is not the case, then yₜᵢₗₑ becomes received y_{bottom/top}.

The flowcharts depicted in Figure 15A-15B demonstrate how the automatic array mapping procedure can be carried out by the processor. The flowchart illustrates an exemplary embodiment for implementing the above mentioned rules. During the update of a display module having a coordinate {Xₒ:Yₒ}, information about the coordinates of the left, right, top, and bottom display modules is obtained. The left display module has a coordinate {X_{L}:Y_{L}}, the right display module has a coordinate {X_{R}:Y_{R}}, the top display module has a coordinate {X_{T}:Y_{T}}, and the bottom display module has a coordinate {X_{B}:Y_{B}}.

The information about the coordinates of the left, right, top, and bottom display modules are correspondingly sent to all display modules before comparison decision procedure is implemented. The comparison decision procedure is only made when the corresponding tile is detected by the display module being updated. If at least one of the comparison decisions is met after comparison with the existing neighboring display module, the coordinate {Xₒ:Yₒ} may be updated. However, if all comparisons with the coordinate {Xₒ:Yₒ} are not met for all neighbouring display module, the value of the coordinate {Xₒ:Yₒ} remains the same.

The comparison is made separately for the X and Y axes. The process of comparison for the Xₒ coordinate is shown in Figure 15A, and the process of comparison for the Yₒ coordinate is shown in Figure 15B. The comparison decision process in steps 1511, 1513, 1515, 1517, and 1521, 1523, 1525, 1527 for updating the Xₒ and Yₒ coordinates, respectively, is implemented for each iteration of the continuous update of the display module's coordinates. For each iteration, at least one of the processes in steps 1512, 1514, 1516, 1518, 1519 for updating the Xₒ coordinate is implemented. For each iteration, at least one of the processes in steps 1522, 1524, 1526, 1528, 1529 for updating the Yₒ coordinate is implemented. Figures 16A-16G demonstrate how the automatic array mapping procedure of an LED wall can still work properly even when some display modules are missing or defective. As shown in the figures, the initialization of the array mapping procedure for a plurality of display modules does not require any specific display module to have the correct coordinate to determine the correct coordinates of the display modules.

By implementing the abovementioned rules, such us in the flowchart of Figures 15A and 15B, the coordinates for all the display modules can still be determined even while the display module positioned in the reference coordinate is absent. In this exemplary embodiment, the reference position is assumed to be the top left corner of the display wall, and the default coordinate values for all modules in the initial setting are {1:1}.

Despite the absence of the module located at the reference position {1:1}, the continuous update using the array mapping algorithm can still determine the correct coordinates following the pre-defined incremental direction, i.e. left-to-right, top-to-bottom direction and propagate from right to left, bottom to top after the coordinate of the bottom right corner display module has been determined.

The algorithm can be adapted if the reference position is at a different location, for example at a different corner, or in the middle of the LED wall, etc. Coordinates could also increment in the opposite directions. The algorithm can also be adapted to for example a honeycomb array of display modules, each display module having then a hexagonal shape.

Due to the high bandwidth data link, and the nature of the system, the array mapping will be finished in a very short time and will not be noticed by the user. Any type of link and speed can be used for the tile to tile communication. For example, 5G through USB can be used for the tile to tile communication.

The display wall processor can query the module coordinates to map the video stream correctly on the display modules. This procedure can be done without any user display wall processor, as it is irrespective of the sections.

Adjacent display modules of the display wall communicate continuously while the wall is powered up. This continuous communication between adjacent display modules allows the coordinates to be updated instantly. This is independent of an external controller.

The speed of continuously communicating depends on the type of cable and protocol used. For example, using a 1G ethernet link where the minimum packet length is 64 bytes and maximum packet length is 1518 bytes with a minimum interframe gap of 12 clocks. The minimum speed would be when the maximum packet length is used and is around 81 700 times per second. The maximum speed would be when the minimum packet length is used and is around 1 645 000 times per second. Increasing the bandwidth from 1G to 5G/10G/100G, and using the ethernet protocol, the speed would increase with the same relative amount.

As explained above, each tile will update its coordinates automatically based on the coordinate of its neighbour, at all times, and throughout the entire display.

In prior art methods, at least a main controller is responsible for starting the enumeration process. The coordinates of each tile are transferred from one reference display module, usually the reference display module being directly connected to the processor. The processor is connected to the reference display module and is the initiator of the communication to the first display module to each adjacent one. The display modules are immediately updating their coordinates to the new coordinate and transferring this new coordinate to the next.

### Partial startup of the wall

If no display wall processor is connected there is no issue, the coordinates can update once the tiles start to power up. The problem occurs when the display wall processor is connected and already knows which coordinates the tiles should have (same wall configuration). The display wall processor will be receiving the wrong coordinate from the tile that is connected and would thus start to send the wrong video data. For example, a wall is being powered from the right to the left, this would create the effect that the video is moving from right to left. To solve this problem the display wall processor shall preferably be able to set the correct coordinate into the tile by using the tile communication. In other words, the display wall processor can define a coordinate of a tile to a predefined coordinate. The tile having the predefined coordinate may be used to further update coordinates of the remaining neighboring tiles.

The display wall processor can force a coordinate by filling in the expected coordinates into the tile communication and can set a 'force coordinate' bit.

The display wall processor can only force a coordinate, if the current coordinate of the tile is lower than what is to be expected. When the coordinates of the tile are larger than what the display wall processor was expecting, tiles have been added in the wall (to the left or top). The display wall processor can update the internal list and do nothing.

When the coordinate is indeed lower it can be due to several reasons: tiles are still booting up, tiles have been removed from the wall or tiles are broken. In any case the display wall processor will not be receiving reply packets with the tile information, such as Info ID, included. A user action is needed to clear the current information after removing tiles. If the old list would be used, the display wall processor can force the wrong coordinate into the wall and the list would never be updated.

### Video wall management suite

The video wall manager is configured to divide the wall into sections, for each display wall processor connected to the wall and gives all this information to the display wall processors. After the display wall processor has this internal table, it can start sending section packets containing the list of all the tiles that should be in that section. Tiles will respond with their tile information, such as for example coordinate and info ID which makes it possible to start sending the correct video packets. By specifying a list of coordinates, it gives the flexibility to create non-rectangular sections.

Tiles will send their data over a boundary between two sections, but the receiving tile should not be allowed to select this port as upstream/use this data. The only thing it may be used for is to exchange coordinates. It will contain the wrong section number, or the section packet does not contain the coordinate so it should be ignored.

Figure 7 illustrates eight sections of a LED wall, and their coordinates. Each section has a different grey tone.

The section list corresponding to the LED wall of Figure 7 is provided in the following table:

| **INP section list** | | |
|---|---|---|
| **Wall processor** | **Section number** | **Associated coordinates** |
| 1 | 1 | [1,1] [1,2] [1,3] [1,4] [1,5] [1,6] [1,7] [1,8] |
| | | [2,1] [2,2] [2,3] [2,4] [2,5] [2,6] [2,7] [2,8] |
| 1 | 2 | [3,1] ... [3,8] |
| | | [4,1] ... [4,8] |
| 1 | 3 | [5,1] ... [5,8] |
| | | [6,1] ... [6,8] |
| 1 | 4 | [7,1] ... [7,8] |
| | | [8,1] ... [8,8] |
| 2 | 1 | [9,1] ... [9,8] |
| | | [10,1] ... [10,8] |
| 2 | 2 | [11,1] ... [11,8] |
| | | [12,1] ... [12,8] |
| 2 | 3 | [13,1] ... [13,8] |
| | | [14,1] ... [14,8] |
| 2 | 4 | [15,1] ... [15,8] |
| | | [16,1] ... [16,8] |

### Automatic routing procedure

In addition to the automatic array mapping procedure, an automatic routing procedure is also provided. Tiles route when they receive a section packet with their coordinate included. For redundancy rerouting (removing of a cable) the display module will only be allowed to route to another port where this section number in the packets is the same.

The automatic routing procedure occurs within a section and requires at least one display wall processor connected to at least one section.
- Tiles receiving a section packet with their coordinate not included, should drop the upstream and wait for the correct section packet
- Section packets can be sent when a new valid Info ID has been seen, either in T2T or reply packets
New valid Info ID = Info ID from a neighbour tile included in the current section but not yet in the 'currently connected list'.

The Tile to tile packets, or T2T packets, contain information of each tile, for example, the coordinates, and unique ID of the tile. They may further comprise the neighbouring tile coordinates.

### Case 1: Powered wall, unknown to display wall processor

Let's assume the wall has been powered long enough for all tiles to have their correct coordinate (no display wall processor forcing of coordinate and no redundancy). The Info ID of the tiles are the same as the coordinate for the sake of simplicity.

No tiles will have video and are still sending a full bandwidth of T2T packets to each other. The tile connected to the display wall processor will also be sending T2T packets towards the display wall processor that includes the tile coordinate and info ID. The display wall processor does not yet have knowledge of this info ID so sends a section packet, as illustrated in Figure 8A. The display wall processor keeps a list shown in the following table:

| **Coor. - InfoID List** | | | **Currently Connected List** | |
|---|---|---|---|---|
| **Coor.** | **InfoID** | | **Coor.** | **Info ID** |
| Empty | Empty | | Empty | Empty |

The first tile receives this packet, checks if its coordinate is in the section list, and selects this port as upstream, making the other three ports downstream and able to receive the next packets. It responds to the display wall processor with a reply packet containing the tile information, for example the MAC address, coordinate, and neighbour information, as illustrated in Figure 8B. The content of the section packet is now the following:

| **Coor. -info ID List** | | | **Currently Connected List** | |
|---|---|---|---|---|
| **Coor.** | **InfoID** | | **Coor.** | **Info ID** |
| 8;8 | 88: ... :88 | | 8;8 | 88 |

Now the display wall processor receives the information (MAC address & coordinates) of the info ID but also info ID of any neighbours connected. So again, it sends a single section packet where the next two tiles (7;8), (8;7), will respond on. The display wall processor can only add these tiles to the 'currently connected list' once they have sent a reply packet with their coordinates, as shown in Figure 8C. The content of the section packet is now the following:

| **Coor. -info ID List** | | | **Currently Connected List** | |
|---|---|---|---|---|
| **Coor.** | **InfoID** | | **Coor.** | **Info ID** |
| 8;8 | 88: ... :88 | | 8;8 | 88 |
| 7;8 | 78: ... :78 | | 7;8 | 78 |
| 8;7 | 87: ... :87 | | 8;7 | 87 |

After only a few more iterations most of the tiles are connected, as illustrated in Figure 8D. The content of the section packet contains the list of the following connected tiles:

| **Coor. -info ID List** | | | **Currently Connected List** | |
|---|---|---|---|---|
| **Coor.** | **InfoID** | | **Coor.** | **Info ID** |
| 8;8 | 88: ... :88 | | 8;8 | 88 |
| 7;8 | 78: ... :78 | | 7;8 | 78 |
| 8;7 | 87: ... :87 | | 8;7 | 87 |
| 6;8 | 68: ... :68 | | 6;8 | 68 |
| 7;7 | 77: ... :77 | | 7;7 | 77 |
| 8;6 | 86: ... :86 | | 8;6 | 86 |
| 5;8 | 58: ... :58 | | 5;8 | 58 |
| 6;7 | 67: ... :67 | | 6;7 | 67 |
| 7;6 | 76: ... :76 | | 7;6 | 76 |
| 8;5 | 85: ... :85 | | 8;5 | 85 |
| ... | ... | | ... | ... |
| 8;1 | 81: ... :81 | | 8;1 | 81 |

For this example, it can take 15 iterations before the wall is fully connected, as illustrated in Figure 8E. The display wall processor should stop sending section packets once no new info ID's have been found. Adding a new tile will result in a change of neighbour info ID for the connected tile and the display wall processor will detect this.

The section packet now contains the list of all the tiles which are now connected. The video data is being sent simultaneously in video packets and each video frame will be displayed by the appropriate tile.

| **Coor. -info ID List** | | | **Currently Connected List** | |
|---|---|---|---|---|
| **Coor.** | **InfoID** | | **Coor.** | **Info ID** |
| 8;8 | 88: ... :88 | | 8;8 | 88 |
| 7;8 | 78: ... :78 | | 7;8 | 78 |
| 8;7 | 87: ... :87 | | 8;7 | 87 |
| 6;8 | 68: ... :68 | | 6;8 | 68 |
| 7;7 | 77: ... :77 | | 7;7 | 77 |
| 8;6 | 86: ... :86 | | 8;6 | 86 |
| 5;8 | 58: ... :58 | | 5;8 | 58 |
| 6;7 | 67: ... :67 | | 6;7 | 67 |
| 7;6 | 76: ... :76 | | 7;6 | 76 |
| 8;5 | 85: ... :85 | | 8;5 | 85 |
| ... | ... | | ... | ... |
| 1;1 | 11: ... :11 | | 1;1 | 11 |

### Case 2: Powered wall, known to display wall processor

Because tiles are not allowed to remember which section they belonged to (to support rental, demo kits, ...) routing will have to be repeated. Even if routing has been done before and the display wall processor knows what will be connected, it should do the routing the same way. The 'currently connected' Info ID list will be empty, and routing will be done in the same way as for **case 1.** No coordinates must be forced because the wall was already powered with the correct coordinates. This situation can also be depicted by Figure 8A.

### Case 3: Startup wall, known to display wall processor (forcing coordinate)

For example, only the two right most columns have booted. The coordinates of this part of the wall will be wrong. The display wall processor will receive a T2T packet with coordinate {1;1} and MAC Address {88:88:88:88:88}, as illustrated in Figure 9A.

| **Coor. -info ID List** | | | **Currently Connected List** | |
|---|---|---|---|---|
| **Coor.** | **InfoID** | | **Coor.** | **Info ID** |
| 8;8 | 88: ... :88 | | Empty | Empty |
| 7;8 | 78: ... :78 | | Empty | Empty |
| 8;7 | 87: ... :87 | | Empty | Empty |
| 6;8 | 68: ... :68 | | Empty | Empty |
| 7;7 | 77: ... :77 | | Empty | Empty |
| 8;6 | 86: ... :86 | | Empty | Empty |
| 5;8 | 58: ... :58 | | Empty | Empty |
| 6;7 | 67: ... :67 | | Empty | Empty |
| 7;6 | 76: ... :76 | | Empty | Empty |
| 8;5 | 85: ... :85 | | Empty | Empty |
| ... | ... | | Empty | Empty |
| 1;1 | 11: ... :11 | | Empty | Empty |

The display wall processor already has this info ID in the list but knows the coordinate is wrong. It will send a single packet to force the coordinate {8;8} into the tile, as illustrated in Figure 9B. Let's assume this is checked within the time of one packet so it is easier to explain this case.

| **Coor. -info ID List** | | | **Currently Connected List** | |
|---|---|---|---|---|
| **Coor.** | **InfoID** | | **Coor.** | **Info ID** |
| 8;8 | 88: ... :88 | | Empty | Empty |
| 7;8 | 78: ... :78 | | Empty | Empty |
| 8;7 | 87: ... :87 | | Empty | Empty |
| 6;8 | 68: ... :68 | | Empty | Empty |
| 7;7 | 77: ... :77 | | Empty | Empty |
| 8;6 | 86: ... :86 | | Empty | Empty |
| 5;8 | 58: ... :58 | | Empty | Empty |
| 6;7 | 67: ... :67 | | Empty | Empty |
| 7;6 | 76: ... :76 | | Empty | Empty |
| 8;5 | 85: ... :85 | | Empty | Empty |
| ... | ... | | Empty | Empty |
| 1;1 | 11: ... :11 | | Empty | Empty |

The next packet the display wall processor receives will be a correct T2T packet. This means the coordinate and info ID are as expected. So, it sees a **new valid** Info ID and sends a section packet to the first tile.

Any T2T packets received, before this point, would contain the wrong expected coordinate connected with the info ID in the display wall processor, so it would not send a section packet. Meanwhile the forced coordinate (i.e. predefined coordinate set by the display wall processor) will be used as reference for updating the rest of the wall with their correct coordinate, as illustrated in Figure 9C. In some embodiments, the updating process may use comparison process similar to or an iteration of process shown in figures 15a and 15b.

| **Coor. -info ID List** | | | **Currently Connected List** | |
|---|---|---|---|---|
| **Coor.** | **InfoID** | | **Coor.** | **Info ID** |
| 8;8 | 88: ... :88 | | 8;8 | 88 |
| 7;8 | 78: ... :78 | | Empty | Empty |
| 8;7 | 87: ... :87 | | Empty | Empty |
| 6;8 | 68: ... :68 | | Empty | Empty |
| 7;7 | 77: ... :77 | | Empty | Empty |
| 8;6 | 86: ... :86 | | Empty | Empty |
| 5;8 | 58: ... :58 | | Empty | Empty |
| 6;7 | 67: ... :67 | | Empty | Empty |
| 7;6 | 76: ... :76 | | Empty | Empty |
| 8;5 | 85: ... :85 | | Empty | Empty |
| ... | ... | | Empty | Empty |
| 1;1 | 11: ... :11 | | Empty | Empty |

The tile will respond to the section packet like before with the neighbour Info ID's that the display wall processor has not yet in his 'currently connected' Info ID list. At this point it is not a problem that some tiles having incorrect coordinates when receiving a section packet. The wall is a lot faster in updating the coordinates than the display wall processor routing. In this example it is at the same speed for easier representation, but it takes a few T2T packets before the next section packet has been sent, as illustrated in Figure 9D, 9E.

| **Coor. -info ID List** | | | **Currently Connected List** | |
|---|---|---|---|---|
| **Coor.** | **InfoID** | | **Coor.** | **Info ID** |
| 8;8 | 88: ... :88 | | 8;8 | 88 |
| 7;8 | 78: ... :78 | | 7;8 | 78 |
| 8;7 | 87: ... :87 | | 8;7 | 87 |
| 6;8 | 68: ... :68 | | Empty | Empty |
| 7;7 | 77: ... :77 | | Empty | Empty |
| 8;6 | 86: ... :86 | | Empty | Empty |
| 5;8 | 58: ... :58 | | Empty | Empty |
| 6;7 | 67: ... :67 | | Empty | Empty |
| 7;6 | 76: ... :76 | | Empty | Empty |
| 8;5 | 85: ... :85 | | Empty | Empty |
| ... | ... | | Empty | Empty |
| 1;1 | 11: ... :11 | | Empty | Empty |

| **Coor. -info ID List** | | | **Currently Connected List** | |
|---|---|---|---|---|
| **Coor.** | **InfoID** | | **Coor.** | **Info ID** |
| 8;8 | 88: ... :88 | | 8;8 | 88 |
| 7;8 | 78: ... :78 | | 7;8 | 78 |
| 8;7 | 87: ... :87 | | 8;7 | 87 |
| 6;8 | 68: ... :68 | | 7;7 | 77 |
| 7;7 | 77: ... :77 | | 8;6 | 86 |
| 8;6 | 86: ... :86 | | Empty | Empty |
| 5;8 | 58: ... :58 | | Empty | Empty |
| 6;7 | 67: ... :67 | | Empty | Empty |
| 7;6 | 76: ... :76 | | Empty | Empty |
| 8;5 | 85: ... :85 | | Empty | Empty |
| ... | ... | | Empty | Empty |
| 1;1 | 11: ... :11 | | Empty | Empty |

Eventually the booted wall will have their correct coordinates, be routed and playing the correct video. The display wall processor is not receiving any new Info ID's so will not be sending any section packets. Whenever tiles near the routed wall boot, their coordinates will update, and the routed tile will immediately send a reply packet containing the newly found Info ID, see Figure 9F.

| **Coor. -info ID List** | | | **Currently Connected List** | |
|---|---|---|---|---|
| **Coor.** | **InfoID** | | **Coor.** | **Info ID** |
| 8;8 | 88: ... :88 | | 8;8 | 88 |
| 7;8 | 78: ... :78 | | 7;8 | 78 |
| 8;7 | 87: ... :87 | | 8;7 | 87 |
| 6;8 | 68: ... :68 | | 7;7 | 77 |
| 7;7 | 77: ... :77 | | 8;6 | 86 |
| 8;6 | 86: ... :86 | | 7;6 | 76 |
| 5;8 | 58: ... :58 | | 8;5 | 85 |
| 6;7 | 67: ... :67 | | 7;5 | 76 |
| 7;6 | 76: ... :76 | | 8;4 | 84 |
| 8;5 | 85: ... :85 | | 7;4 | 74 |
| ... | ... | | ... | ... |
| 1;1 | 11: ... :11 | | 7;1 | 71 |

Figures 10A and 10B illustrate how the automatic array mapping operates when a new column of tiles has been added respectively on the left and on the right of the display wall.

In Figure 10A, the original configuration is illustrated in Figure 10A-0. In Figure 10A-1, a column of tiles has been added on the left. In four steps, the automatic array mapping procedure is capable of updating the coordinates of the display wall to the new configuration. In fact, as the column has been added on the left, and the coordinates are numbered with respect to the upper left tile, it takes four steps (as there are four columns of tiles) to obtain the correct coordinates.

In Figure 10B, a column of tiles has been added on the right, as illustrated in Figure 10B-1. It only takes one step to update the coordinates to the configuration.

Figure 11 illustrates a possible block diagram of a system 1100 for controlling an LED display wall 1110. The LED wall is divided into a plurality of sections 1111, 1112, 1113, 1114, 1115, 1116, 1117, and comprises at least one display wall processor 1120. The display wall processor processes signals coming from connected video sources and transmits them to at least one display module of each section of the LED wall. In the example of Figure 11, 7 sections are provided, and the display wall processor is connected to each bottom right display module of each section, however any display module could be connected to the display wall processor.

As described above, it is possible to provide a redundant connection to the display wall processor, from another tile of each section for example. It is also possible to provide a redundant display wall processor, connected to any other tile of the section.

In Figure 12, a more complete system 1200 is illustrated. A Video wall manager 1250 can run a Video wall Management Suite, for example a web based application that allows the user to create, configure, control, and monitor the video wall 1200. A client PC 1270 equipped with a web browser can be connected to the Video wall manager 1260 via the client network 1240. It can be used to run the User Interface (UI) that interacts with the Video wall Management Suite 1250. The Video wall manager 1260 controls one or several display wall processors 1220 depending on the size and the resolution of the LED wall 1200. Video wall manager 1260 and display wall processors are connected together in the Wall network 1230. The additional client network 1240 can be provided for security reasons. It is also possible to use only the wall network 1230.

Cables 1221 can be used to route data from the display wall processor 1220 to display modules in each section of the LED wall. In an example, a single display wall processor can manage up to 8 output ports (8 parts of the LED wall) and can drive 2.080.000 pixels @60Hz of the video wall. This means that the number of tiles (or display modules) handled per display wall processor depends on the resolution, the frame rate, and the types of connections.

Each section of the LED wall can be defined in the video Wall Management Suite. The display wall processors connect, as described above, to at least one tile per section. Redundant processors and/or connections are also possible to implement.

In addition, each display module or tile of the LED wall communicates with its 4 neighbour tiles via cables that link them together. The cables (connections) can be any type of high speed link, provided by any cable, any board to board connector or any wireless link. For example, it can be provided by custom USB cables. Even neighbouring tiles which belong to different sections are connected.

The inter-tile connections are duplex connections, such that the data flow can always go in both directions.

The bandwidth depends on the type of connection which used. For example, the bandwidth can be comprised in a range of 1gbps - 100 gbps.

Figure 13A-13C illustrate a flow chart of the process for the automatic routing at the level of the display modules. The basic module function is shown in the first flowchart of Figure 13A. When a module powers up 1310 it will automatically route 1312 and display video 1320. If the video is ever lost 1316 due to a fault, the automatic routing 1312 will try and find a new path where video is still available.

The second flowchart shown on diagram 13B comprises more detail. When a display module detects a valid processor 1321 (this can be either any valid packet or the routing packet), the display module will select that port as upstream and starts sending reply packets 1322. It will then start to display the video 1320 received from this upstream. If the video is lost 1324 the upstream is dropped 1325 and the display module tries to find a new valid processor.

In the third flow chart on Figure 13C, at startup the modules will create T2T packets 1331 and send them to each neighbour to calculate the coordinates. When a valid section packet (this means with their coordinate included) has been detected 1332, that port is selected as upstream and starts sending reply packets 1322.

It will then start to display the video 1320 received if a higher priority processor has been found 1335 a new upstream will be selected 1322. This can/is done for a certain amount of time (for example 1 minute).

After this locking time has runout 1336, the upstream will be locked 1337 and can not change anymore due to the priority.

When video upstream has been lost 1324 the tile will first check if there is another port with valid video 1338. If this is the case that port is selected as upstream 1339 and otherwise the upstream is dropped 1325.

After dropping the upstream the routing packet has to be received again before video can be displayed.

The following references are used in the flow chart:
- 1310: Start
- 1312: Automatic routing
- 1320: Display video
- 1316: Video lost?
- 1321: Video processor detected?
- 1322: Select upstream and start sending reply packets
- 1324: Upstream lost?
- 1325: Drop upstream
- 1331: Create T2T packets with coordinates
- 1332: Valid section packet detected?
- 1325: Higher priority processor found?
- 1336: Locking time runout?
- 1337: Lock upstream display video
- 1338: Valid video on other port?
- 1339: select new upstream

Figure 14 illustrates a flow chart but at the level of the display wall processor. The display wall processor has three processes running in parallel. The display wall processor will display video (send it towards the modules) depending on the configuration map 1401 built from the currently connected module list.

When a new unique (module) ID has been detected 1402, either from a T2T or reply packet received from the modules, it will add this unique ID to the connected module list 1403. Depending on the implementation a new section packet is sent based on the received coordinate 1404. (In the case where tiles route without section packets this is not needed). Afterwards the video configuration map is updated with the new module.

For each module in the connected module list 1406 it will keep track how long it has been since the last reply packet has been received.

If this time is longer than for example 3 seconds 1407 it will be removed from the connected module list 1408 and the video configuration map is updated 1405.

When a reply packet has been received within the 3 seconds (for example), the timer is reset, and nothing happens.

The following references are used in the flow chart:
- 1400: Start
- 1401: Display video based on the configuration map
- 1402: New unique ID detected? (T2T or reply)
- 1403: Add unique ID to the connected module list
- 1404: Send new section packet based on received coordinate
- 1405: Update video configuration map
- 1406: For each module in connected module list
- 1407: reply received past 3 seconds?
- 1408: remove unique ID from the connected list

The following is a non-limiting enumerated example embodiment of the disclosed invention.

A display wall comprising display modules arranged in an array such that each display module has neighbouring display modules provided on at least one side of the display module, wherein
- each display module comprises a controller connected to a port provided on each side of the display module, each port having a specific location on the display module, and each port being configured to connect to a port of a neighbouring display module,
- each controller of the display modules is further configured to continuously communicate with each neighbouring display module via each side port upon start up of the display wall by exchanging tile to tile packets, the tile-to-tile packets comprising at least information on the display module coordinates.

While the invention has been illustrated with rectangular and square tiles, the invention is not limited thereto and tiles having any shape can be provided, as for example hexagonal tiles.

While the invention has been described hereinabove with reference to specific embodiments, this was done to clarify and not to limit the invention. The skilled person will appreciate that various modifications and different combinations of disclosed features are possible without departing from the scope of the invention.

The following clauses define particular aspects and embodiments of the present disclosure.
1. Method for mapping a display wall comprising a plurality of display modules, each display module comprising a display module controller and a port on each side of the module connected to the controller, each display module further being connected to a at least one direct neighbor display module through a respective side port, the display wall having a reference display module with reference coordinates and an incremental direction for the coordinates of the display modules, the method comprising the steps of
   - Powering up the display wall such that all display module controllers are turned on,
   - Setting all display module coordinates to an initial setting wherein all display module coordinates have a same default value coordinate corresponding to the coordinates of the reference display module,
   - each display module continuously communicating with its direct neighbour display module via a corresponding side port by sending tile-to-tile packets comprising information on at least the coordinates of said display module, and by receiving tile-to-tile packets from each direct neighbour display module comprising information on at least the coordinates of said direct neighbour display module,
   - After sending and receiving the tile-to-tile packets, for each display module, continuously updating the display module coordinates by comparing its coordinates to the coordinates of each of its neighbours and following the incremental direction with respect to the coordinates of each of its neighbours.
2. Method according to clause 1, wherein the step of updating the coordinates by comparing the coordinates of the two neighbouring display modules is performed as follows: if the coordinate of a first display module of the two neighbouring display modules is higher than, lower than, or equal to the coordinate of a second display module of the two neighbouring display modules, incrementing, decrementing, or keeping as is the coordinate of the first display module as a function of the coordinate of the second display module and incremental direction of the display wall.
3. Method according to any of clauses 1 or 2 wherein the default value of the coordinates of the plurality of display modules are coordinate of a reference position in the display wall.
4. Method according to any of the preceding clauses, wherein tile to tile packets further comprise information on the display module unique ID of said display module.
5. Method according to any of the preceding clauses, wherein the step of continuously communicating with a direct neighbour display module is performed at a bandwidth which is compatible with the bandwidth of the link cable connecting two display modules.
6. Method according to any of the preceding clauses, further comprising the step of dividing the display wall into at least one section, or at least two sections.
7. Method according to clause 6 further comprising the step of connecting at least one display module of a section to a display wall processor.
8. Method according to any of the preceding clauses, further comprising, for each display module, the step of
   - a display module receiving a packet from a corresponding display wall processor and selecting a port receiving the packet as upstream port, setting the other ports to downstream ports,
   - The corresponding display wall processor receiving a reply packet from the display module comprising information on the display module, the display module is a connected display module,
      further comprising, for the display wall, the step of,
   - When all the display modules of that section are connected to the display wall processor, the display wall processor completing a list of connected display modules with their information,
   - Each of the connected display modules forwarding said packet on at least one downstream port when available.
9. Method according to any of clauses 6 to 7, further comprising, for each display module belonging to a same section when the display wall have at least two sections, and each section having a corresponding display wall processor, the step of,
   - The display wall processor of said section receiving a packet from a display module to connect containing its information, thereby adding said display module to the list of connected display modules of said section,
   - The display wall processor sending a section packet to the connected display module in said section, comprising information on the display module and the information of the other display modules of said section,
   - the display module receiving the section packet from the display wall processor and verifying if its display module information is connected and is in the list,
   - If in the list, the display module selecting a port of the display module receiving the section packet as upstream port, and the remaining ports as downstream ports,
   - The display wall processor receiving a reply packet from each connected display modules containing the display module information and neighbour display module information,
      further comprising, for each section, the step of,
   - When all the display modules have been connected, completing the list of connected display modules with their information,
   - each of the connected display modules forwarding said section packet on at least one downstream port when available.
10. Method according to any of clauses 8 to 9, wherein the display module information comprises at least the display module coordinates, and preferably its unique ID, and preferably the coordinates and/or unique ID of each neighbouring display module, and preferably the section number said display module belongs to when available.
11. Method according to any of clauses 8 to 10, wherein the step of selecting the upstream port for each display module is based on selecting the port having the highest priority which is operable.
12. Method according to any of the preceding clauses, further comprising the step of defining, by the display wall processor, the coordinate of a display module to a predefined coordinate.
13. Method according to clause 12, further comprising the step of updating the coordinates of the display modules of the display wall other than the display module having the predefined coordinate with respect to the predefined coordinate.
14. Method according to any of the preceding clauses, wherein a display module autonomously selects a new upstream port when its current upstream port fails.
15. Method according to any of the preceding clauses, further comprising the step of connecting the same or a second display wall processor to the first or to a second display module of the at least one section.
16. Method according to any of the preceding clauses, wherein the display modules are at least one of rectangular, hexagonal, and wherein the display wall follows a matrix arrangement, honeycomb arrangement, etc. accordingly.
17. Method according to any of the preceding clauses wherein the display modules are LED, OLED, micro-LED, LCD, e-Ink, display modules, (rear) projection display, or any other visualisation technology.
18. Method according to any of the preceding clauses, wherein each display module comprises a controller and a port on each side of the module, each port comprising a port ID specifying the location of the port on the display module.
19. Method according to any of the preceding clauses, further comprising the step of using a Port ID to detect a wrong cabling connection.
20. Method for installing a display wall comprising a plurality of display modules to generate a display wall having the desired configuration, each display module comprising a display module controller and a port on each side of the module connected to the controller, the method further comprising the steps of
   - Installing each display module until the display wall has the desired configuration,
   - Connecting each display module to its direct neighbour at each side port,
   - Performing the method of any of clauses 1 to 5 such that the display module coordinates are updated.
21. Method according to clause 20, further comprising the step of
   - Adding, removing, or replacing display modules in the display wall,
   - repeating the step of performing the method of any of clauses 1 to 5 such that the display module coordinates are updated.
22. Method according to any of clauses 20 or 21, further comprising the step of dividing the display wall into at least one or a plurality of sections.
23. Method according to clause 22, further comprising the step of providing at least one display wall controller and connecting at least one display module per section to the at least one display wall controller.
24. Method according to clause 23, further comprising the step of performing the method of any of clauses 6 to 19, and further comprising the step of the display wall processor to send video packets to each display module of each section, to display images with the display wall, wherein the video packets comprise for each display module its video data and corresponding display module unique ID.

## Claims

1. Method for automatically routing a display wall comprising a section comprising a plurality of display modules, each display module comprising a display module controller and a left, right, top and bottom port located on each side of the module respectively and connected to the controller, each display module further being connected to at least one direct neighbour display module through a respective port among the left, right, top and bottom ports, and a display wall processor being connected to one of the plurality of display modules, the method comprising the steps of:
- sending, by said one of the plurality of display modules towards the display wall processor, information comprising a coordinate of said one of the plurality of display modules and an info ID identifying said one of the plurality of display modules,
- upon detecting, by the display wall processor, an info ID which is not present in a currently connected list maintained by the display wall processor, sending, by the display wall processor to said one of the plurality of display modules, a section packet configured to comprise a list of coordinates of the plurality of display modules,
- receiving, by said one of the plurality of display modules, the section packet, checking whether its coordinate is included in the list of coordinates of the section packet, and, if its coordinate is included, selecting the port on which the section packet was received as upstream port and setting the other ports as downstream ports,
- having selected an upstream port, sending, by said one of the plurality of display modules to the display wall processor, a reply packet containing display module information comprising at least the coordinate of said one of the plurality of display modules, an identifier of said one of the plurality of display modules, and one or more info IDs of one or more neighbouring display modules connected to said one of the plurality of display modules,
- upon receiving the reply packet, adding, by the display wall processor, said one of the plurality of display modules to the currently connected list,
wherein the method further comprises performing the following steps iteratively until no new info IDs are detected:
- sending, by the display wall processor to the display module(s) on the currently connected list, a further section packet to the one or more neighbouring display modules connected to the currently connected display modules, the one or more neighbouring display modules being identified by the one or more info IDs reported by the currently connected display module(s) in respective reply packet(s),
- forwarding, by the currently connected display module(s), the received further section packet on one or more of their respective downstream ports when available,
- receiving, by each of the one or more neighbouring display modules, the section packet, checking whether its coordinate is included in the list of coordinates of the further section packet, and, if its coordinate is included, selecting the port on which the further section packet was received as upstream port and setting the other ports as downstream ports,
- having selected an upstream port, sending, by each of the one or more neighbouring display modules towards the display wall processor, a reply packet containing further display module information comprising at least the neighbouring coordinate of the respective neighbouring display module, a neighbouring identifier of the respective neighbouring display module, and one or more info IDs of one or more further neighbouring display modules connected to the respective neighbouring display module, and
- upon receiving each further reply packet, adding, by the display wall processor, the respective neighbouring display module to the currently connected list.

2. Method according to claim 1, wherein the identifier and the neighbouring identifier included in the reply packet and in the further reply packet, respectively, each comprises a MAC address of said one of the plurality of display modules and the respective neighbouring display module, respectively.

3. Method according to claim 1 or 2, wherein the display wall processor stops sending section packets when no new info IDs are detected in the reply packets received from the connected display modules.

4. Method according to any of the preceding claims, further comprising the step of upon disconnection of a cable connected to a selected upstream port of a respective display module, the respective display module is configured to reroute only to another port on which received packets carry the same section number as the section to which said display module belongs.

5. Method according to any of the preceding claims, wherein, when no longer valid data is received on the selected upstream port of a respective display module, said respective display module immediately selects a different port on which a valid data stream is received as the new upstream port, thereby providing seamless cable redundancy.

6. Method according to any of the preceding claims, wherein the step of selecting the upstream port is based on selecting, among the operable ports, the port having the highest priority according to a predefined priority rule.

7. Method according to any of the preceding claims, further comprising the step of each of the plurality of display modules, at startup, creating tile-to-tile, T2T, packets and sending said T2T packets to each of its direct neighbour display modules through the respective port to compute its coordinates, each T2T packet comprising the info ID of the sending display module, such that the receiving neighbour display module updates its information with the info ID of said sending display module.

8. Method according to claim 7, wherein the one or more info IDs of the one or more neighbour display modules collected via the T2T packets are forwarded to the display wall processor in the reply packet.

9. Method according to any of the preceding claims, wherein the reply packet further comprises neighbour port information, said neighbour port information being used by the display wall processor to add an upstream info ID to a composition information and to identify a redundant display wall processor connected to the display wall.

10. Method according to any of the preceding claims, wherein, at the level of each of the plurality of display modules, the method comprises the steps of:
- at startup, creating tile-to-tile packets, T2T packets, and sending said T2T packets to each neighbour display module to compute the coordinates of said display module;
- detecting a valid section packet whose list of coordinates includes the coordinate of said display module; and,
- upon such detection, selecting the port on which said valid section packet was received as upstream port and starting to send reply packets through said upstream port.

11. Method according to any of the preceding claims, wherein, at the level of the display wall processor, the method comprises the steps of:
- detecting a new unique ID from a tile-to-tile packet or a reply packet received from a display module;
- adding the new unique ID to the currently connected list;
- sending a section packet based on the received coordinate; and
- updating a video configuration map with the newly connected display module.

12. Method according to any of the preceding claims, wherein, when the display wall is already powered with correct coordinates and the display wall processor is restarted such that its currently connected list is empty, the method steps are repeated without forcing the coordinates of the display modules.

13. Method according to any of the preceding claims, further comprising the step of forcing, by the display wall processor, the coordinate of a predetermined display module to a predefined coordinate at startup, the other display modules updating their coordinates with respect to said predefined coordinate.

14. Method according to any of the preceding claims, further comprising the step of simultaneously transmitting video data to the display modules in video packets, each video frame being displayed by the appropriate display module according to its coordinate.

15. Method according to any of the preceding claims, wherein the display wall is divided into at least two sections, each section having a corresponding display wall processor, wherein the method steps are performed independently within each section, each display module being allowed to select as upstream port only a port on which a section packet carrying the section number of said display module is received.
